# EUROPEAN PATENT SPECIFICATION

(11) **EP 1 552 537 B1**
(45) Date of publication and mention of the grant of the patent: **29.08.2007**
(21) Application number: 03754048.1
(22) Date of filing: 08.10.2003
(51) Int. Cl.: H01F 1/057

(54) **NANOCOMPOSITE MAGNET AND METHOD FOR PRODUCING THE SAME**
NANOKOMPOSIT-MAGNET UND HERSTELLUNGSVERFAHREN
AIMANT NANOCOMPOSITE ET SON PROCEDE DE PRODUCTION

(30) Priority: 17.10.2002 JP 2002302769
(43) Date of publication of application: 13.07.2005
(73) Proprietor: Neomax Co., Ltd., Osaka-shi, Osaka 541-0041 (JP)
(72) Inventor: MIYOSHI, Toshio, Shimamoto-cho, Mishima-gun, Osaka 618-00 (JP); KANEKIYO, Hirokazu, Kyoto-shi, Kyoto 610-1152 (JP)
(74) Representative: Grünecker, Kinkeldey, Stockmair & Schwanhäusser Anwaltssozietät
(86) International application number: PCT/JP2003/012923
(87) International publication number: WO 2004/036602

(56) References cited:
- EP-A- 1 207 537

## Description

### TECHNICAL FIELD

The present invention generally relates to a nanocomposite magnet that is applicable for use in motors and actuators of various types and a method for producing such a magnet. More particularly, the present invention relates to a nanocomposite magnet that includes a compound having an R₂Fe₁₄B-type crystal structure as a hard magnetic phase and α-Fe and other soft magnetic phases.

### BACKGROUND ART

Recently, it has become more and more necessary to further improve the performance of, and further reduce the size and weight of, consumer electronic appliances, office automation appliances and various other types of electric equipment. For these purposes, a permanent magnet for use in each of these appliances is required to maximize its performance to weight ratio when operated as a magnetic circuit. For example, a permanent magnet with a remanence Bᵣ of 0.5 T or more is now in high demand. Hard ferrite magnets have been used widely because magnets of this type are relatively inexpensive. However, the hard ferrite magnets cannot achieve the high remanence Bᵣ of 0.5 T or more.

An Sm-Co based magnet, produced by a powder metallurgical process, is currently known as a typical permanent magnet that achieves the high remanence Bᵣ of at least about 0.5 T. Examples of other high-remanence magnets include an Nd-Fe-B based sintered magnet produced by a powder metallurgical process and an Nd-Fe-B based rapidly solidified magnet produced by a melt quenching process. An Nd-Fe-B based sintered magnet is disclosed in Japanese Laid-Open Publication No. 59-46008, for example, and an Nd-Fe-B based rapidly solidified magnet is disclosed in Japanese Laid-Open Publication No. 60-9852, for instance.

However, the Sm-Co based magnet is expensive, because Sm and Co are both expensive materials.

As for the Nd-Fe-B based magnet on the other hand, the magnet is mainly composed of relatively inexpensive Fe (typically in an amount of about 60 wt% to about 70 wt% of the total weight), and is much less expensive than the Sm-Co based magnet. Nevertheless, it is still expensive to produce the Nd-Fe-B based magnet. This is partly because huge equipment and a great number of manufacturing and processing steps are required to separate and purify, or to obtain by reduction reaction, Nd, which usually accounts for about 10 at% to about 15 at% of the magnet. Also, a powder metallurgical process normally requires a relatively large number of manufacturing and processing steps by its nature.

Compared to an Nd-Fe-B based sintered magnet formed by a powder metallurgical process, an Nd-Fe-B based rapidly solidified magnet can be produced at a lower cost by a melt quenching process. This is because an Nd-Fe-B based rapidly solidified magnet can be produced through relatively simple process steps of melting, melt quenching and heat treating. However, to obtain a permanent magnet in bulk by a melt quenching process, a bonded magnet should be formed by compounding a magnet powder, made from a rapidly solidified alloy, with a resin binder. Accordingly, the magnet powder normally accounts for at most about 80 volume % of the molded bonded magnet. Also, a rapidly solidified alloy, formed by a melt quenching process, is magnetically isotropic.

For these reasons, an Nd-Fe-B based rapidly solidified magnet produced by a melt quenching process has a remanence Bᵣ lower than that of a magnetically anisotropic Nd-Fe-B based sintered magnet produced by a powder metallurgical process.

As disclosed in Japanese Laid-Open Publication No. 1-7502, a technique of adding, in combination, at least one element selected from the group consisting of Zr, Nb, Mo, Hf, Ta and W and at least one more element selected from the group consisting of Ti, V and Cr to the material alloy effectively improves the magnetic properties of an Nd-Fe-B based rapidly solidified magnet. When these elements are added to the material alloy, the magnet has increased coercivity H_{cJ} and anticorrosiveness. However, the only known effective method of improving the remanence Bᵣ is increasing the density of the bonded magnet. Also, where an Nd-Fe-B based rapidly solidified magnet includes 6 at% or more of rare-earth elements, a melt spinning process, in which a melt of its material alloy is ejected through a nozzle against a chill roller, has often been used in the prior art to rapidly cool and solidify the material alloy at an increased rate.

As for an Nd-Fe-B based rapidly solidified magnet, an alternative magnet material was proposed by R. Coehoorn et al., in J. de Phys, C8, 1988, pp. 669-670. The Coehoorn material has a composition including a rare-earth element at a relatively low mole fraction (i.e., around Nd_{3.8}Fe_{77.2}B₁₉, where the subscripts are indicated in atomic percentages) and an Fe₃B phase as its main phase. This permanent magnet material is obtained by heating and crystallizing an amorphous alloy that has been prepared by a melt quenching process. Also, the crystallized material has a metastable structure in which soft magnetic Fe₃B and hard magnetic Nd₂Fe₁₄B phases coexist and in which crystal grains of very small sizes (i.e., on the order of several nanometers) are distributed finely and uniformly as a composite of these two crystalline phases. For that reason, a magnet made from such a material is called a "nanocomposite magnet". It was reported that such a nanocomposite magnet has a remanence Bᵣ as high as 1 T or more. But the coercivity H_{cJ} thereof is relatively low, i.e., in the range from 160 kA/m to 240 kA/m. Accordingly, this permanent magnet material is applicable only when the operating point of the magnet is 1 or more.

It has been proposed that various metal elements be added to the material alloy of a nanocomposite magnet to improve the magnetic properties thereof. See, for example, Japanese Laid-Open Publication No. 3-261104, Japanese Patent Publication No. 2727505, and Japanese Patent Publication No. 2727506. However, none of these proposed techniques is reliable enough to always obtain a sufficient "characteristic value per cost". More specifically, none of the nanocomposite magnets produced by these techniques realizes a coercivity that is high enough to actually use it in various applications. Thus, none of these magnets can exhibit commercially viable magnetic properties.
Also, W. C. Chan et al., reported a technique of obtaining Nd₂Fe₁₄B and α-Fe phases with grain sizes on the order of several tens nm. According to Chan' s technique, the amorphous former La is added to a material alloy. Next, the material alloy is melt-spun to obtain a rapidly solidified alloy mainly composed of amorphous phases. And then the alloy is heated and crystallized to nucleate and grow both the Nd₂Fe₁₄B and α-Fe phases simultaneously. See W. C. Chan et al., "The Effects of Refractory Metals on the Magnetic Properties of α - Fe/R2Fe14B-type Nanocomposites", IEEE Trans. Magn. No. 5, INTERMAG. 99, Kyongiu, Korea, pp. 3265-3267, 1999. This article also teaches that adding a refractory metal element such as Ti in a very small amount (e.g., 2 at%) improves the magnet performance and that the mole fraction of Nd, rare-earth element, is preferably increased from about 9.5 at% to about 11.0 at% to reduce the grain sizes of the Nd₂Fe₁₄B and α -Fe phases. The refractory metal is added to reduce the nucleation of borides such as R₂Fe₂₃B₃ and Fe₃B and to make a magnet consisting essentially of Nd₂Fe₁₄B and α-Fe phases. According to the Chan' s technique, the rapidly solidified alloy for a nanocomposite magnet is prepared by a melt spinning process in which a molten alloy is ejected through a nozzle onto the surface of a chill roller that is rotating at a high velocity. The melt spinning process is suitably effective to make an amorphous rapidly solidified alloy because a process of this type ensures an extremely high cooling rate.

To overcome these problems, the applicant of the present application developed an improved nanocomposite magnet, including a compound with an R₂Fe₁₄B-type crystal structure at an increased volume percentage, and disclosed it in Japanese Laid-Open Publication No. 2002-175908. Specifically, such a nanocomposite magnet can be obtained by adding Ti to a material alloy, including less than 10 at% of rare-earth elements and more than 10 at% of boron, such that an α-Fe phase does not grow excessively while the molten alloy is being rapidly cooled and solidified.

Japanese Patent Publication No. 2002-285301 and Japanese Patent No. 3297676 disclose a number of elements that may be added to a nanocomposite magnet. Examples of those elements include Al, Si, V, Cr, Mn, Ga, Zr, Mb, Mo, Ag, Hf, Ta, W, Pt, Au and Pb.

In the nanocomposite magnet disclosed in Japanese Laid-Open Publication No. 2002-175908, the additive Ti realizes a novel structure in which fine soft magnetic phases are dispersed on the grain boundary of a hard magnetic phase. However, if the mole fraction of the rare-earth elements is defined even lower than such a nanocomposite magnet, no nanocomposite magnet with excellent magnet performance can be obtained unless the mole fraction of boron is decreased to less than about 10 at%.

As for a material alloy including less than about 10 at% of rare-earth elements and less than about 10 at% of boron, however, the melt of such a material alloy has an excessively increased viscosity and the resultant rapidly solidified alloy rarely has the desired fine structure. The molten alloy is normally rapidly cooled by a melt-quenching process, which may be a melt spinning process that rotates a chill roller at a relatively high velocity or a strip casting process that rotates the chill roller at a relatively low velocity, for example. Among other things, the strip casting process is regarded as a melt-quenching process that effectively contributes to mass production, because the strip casting process results in a relatively low cooling rate and can make a relatively thick, thin-strip rapidly solidified alloy.

However, to mass produce nanocomposite magnets, in which the mole fraction of rare-earth elements is reduced to about 7 at% or less, by a melt-quenching process resulting in a relatively low cooling rate such as the strip casting process, the material alloy needs to include boron at more than about 10 at%. Nevertheless, if no Ti with or without Nb is added to a material alloy including about 4 at% to 7 at% of rare-earth elements and about 10 at% to about 15 at% of boron, then the coercivity H_{cJ} of the resultant nanocomposite magnet will fall short of about 400 kA/m, which is the minimum required level to actually use the magnet in a motor, for example, and the loop squareness of the demagnetization curve thereof will not be so good, either.

A nano composite magnet and a magnet for producing the same are also disclosed in EP 1 207 537 A1. In particular this prior art document discloses a method comprising the steps of preparing a melt of an iron-based rare earth material alloy, the material alloy having a composition represented by the general formula: (Fe₁₋ₘTₘ)_{100-x-y-z-n}(B₁₋ₚCₚ)ₓR_{y}Ti_{z}Mₙ, where T is at least one element selected from the group consisting of Co and Ni; R is at least one element selected from the group consisting of Y (yttrium) and the rare earth elements; and M is at least one element selected from the group consisting of Al, Si, V, Cr, Mn, Cu, Zn, Ga, Zr, Nb, Mo, Ag, Hf, Ta, W, Pt, Au and Pb, the mole fractions x,y,m,n and p satisfying the inequalities of:
10 at% < x ≤ 25 at%;
6 at%≤ y < 10 at%;
0.5 at%≤ z≤ 12 at%;
0≤ m≤ 0.5;
0 at%≤ n≤ 10 at%; and
0≤ p≤ 0.25, respectively;
and rapidly cooling the melt using a chill roller to make a rapidly solidified alloy comprising an R₂Fe₁₄B phase and a soft magnetic phase.

### DISCLOSURE OF INVENTION

In order to overcome the problems described above, a nanocomposite magnet as defined in claim 1 and a method for producing the same as defined in claim 5 are provided. Preferred embodiments are subject to the dependent claims.

Other features, elements, processes, steps, characteristics and advantages of the present invention will become more apparent from the following detailed description of preferred embodiments of the present invention with reference to the attached drawings.

### BRIEF DESCRIPTION OF DRAWINGS

FIG. 1 is a cross-sectional view schematically illustrating an exemplary configuration for a strip caster for use in a preferred embodiment of the present invention.
FIG. 2 is a graph showing the results of a powder XRD analysis that was carried out on specific examples of preferred embodiments of the present invention and on comparative examples.

### BEST MODE FOR CARRYING OUT THE INVENTION

The present inventors acquired the basic idea of the present invention by discovering that when Ti and V were added in combination to an alloy including about 4 at% to about 7 at% of rare-earth elements and about 10 at% to about 15 at% of boron and carbon, a nanocomposite magnet, exhibiting good loop squareness at its demagnetization curve, could be obtained. Japanese Patent Publication No. 2002-285301 and Japanese Patent No. 3297676 disclose a number of additive elements but do not mention at all the unexpected effects to be achieved by adding Ti and V in combination.

As the applicant of the present application already disclosed in Japanese Laid-Open Publication No. 2002-175908, the additive Ti minimizes the nucleation and growth of α-Fe while the molten alloy is being rapidly cooled and solidified. Thus, by adding Ti, a structure, which includes a hard magnetic phase having the R₂Fe₁₄B type crystal structure at more than about 50 vol% and in which soft magnetic phases are dispersed or thinly distributed over the grain boundary of the hard magnetic phase, can be obtained.

The additive Ti achieves these advantageous effects. However, the present inventors discovered that if the mole fraction of the rare-earth elements was reduced to further increase the magnetization of the nanocomposite magnet disclosed in Japanese Laid-Open Publication No. 2002-175908, the magnet performance rather deteriorated. To increase the magnetization of a nanocomposite magnet in which the hard magnetic phase having the R₂Fe₁₄B type crystal structure and the soft magnetic phases such as the α-Fe and iron-based borides coexist in the same metal structure and are magnetically coupled together through exchange interactions, it is normally believed effective to decrease the mole fraction of the rare-earth elements and thereby increase the volume percentage of the α -Fe phase. This is because the saturation magnetization of the α-Fe phase is higher than that of the hard magnetic phase having the R₂Fe₁₄B type crystal structure.

However, the present inventors discovered that if the mole fraction of the rare-earth elements, included in a composition with Ti, was reduced to about 7 at% or less, a coercivity H_{cJ} of about 400 kA/m or more could not be achieved, the demagnetization curve had bad loop squareness, and good magnetic properties were not obtained unless the amount of the additive Ti was increased. Nevertheless, when the amount of the additive Ti was simply increased to overcome such a problem, a non-magnetic Ti-B compound precipitated profusely and the magnet performance rather deteriorated.

Thus, the present inventors carried out experiments in which various combinations of metal elements, each consisting of Ti and another metal element, were added to a composition in which the mole fraction of the rare-earth elements was reduced to about 7 at% or less and boron was included at an increased mole fraction. As a result, when Ti and V were added in combination, a nanocomposite magnet, including increased volume percentages of iron-based borides and α-Fe with high magnetization, could be produced successfully by a strip casting process.

A nanocomposite magnet according to the present invention has a composition represented by the general formula: (Fe₁₋ₘTₘ)_{100-x-y-z-w-n}(B₁₋ₚCₚ)ₓR_{y}Ti_{z}V_{w}Mₙ, where T is at least one element selected from the group consisting of Co and Ni; R is a rare-earth element; and M is at least one element selected from the group consisting of Al, Si, Cr, Mn, Cu, Zn, Ga, Nb, Zr, Mo, Ag, Ta and W. The mole fractions x, y, z, w, n, m and p preferably satisfy the inequalities of: 10 at%<x≦15 at%; 4 at%≦y<7 at%; 0.5 at%≦z≦8 at%; 0.01 at%≦w≦6 at%; 0 at%≦n≦10 at%; 0≦m≦0.5; and 0.01 ≦p≦0.5, respectively. The nanocomposite magnet includes a hard magnetic phase with an R₂Fe₁₄B type crystal structure and a soft magnetic phase.

According to the present invention, by adding Ti and V in combination to the material alloy, the coercivity and/or the maximum energy product of the nanocomposite magnet can be increased by at least 1 % as compared with a magnet including no V. Also, the nanocomposite magnet may include at least 40 vol% of the hard magnetic phase with the R₂Fe₁₄B type crystal structure due to the addition of Ti and V. In the resultant structure, the hard magnetic phase with the R₂Fe₁₄B type crystal structure preferably has an average grain size of about 10 nm to about 200 nm, while the soft magnetic phase preferably has an average grain size of about 1 nm to about 100 nm.

In a preferred embodiment of the present invention, a melt of an iron-based alloy, including Fe, B, C, R (which is at least one of the rare-earth elements including Y), Ti and V as its indispensable elements, js preferably rapidly cooled by a melt-quenching process such as a strip casting process within a reduced-pressure atmosphere, thereby making a rapidly solidified alloy including a microcrystalline R₂Fe₁₄B. type compound phase. The rapidly solidified alloy may then be thermally treated if necessary to crystallize amorphous portions remaining in the rapidly solidified alloy.

A strip casting process is a technique of making a thin strip of rapidly solidified alloy by bringing a melt of an alloy into contact with the surface of a chill roller and rapidly cooling and solidifying the melt. According to preferred embodiments of the present invention, the melt is rapidly cooled and solidified with a chill roller that rotates faster than that used in a conventional strip casting process. Compared to a melt spinning process in which a melt of an alloy is ejected through a nozzle orifice onto the surface of a chill roller, the strip casting process results in a lower cooling rate. However, the strip casting process ensures high mass productivity because this process provides a thin strip of rapidly solidified alloy with relatively large width and thickness. Optionally, a nanocomposite magnet according to a preferred embodiment of the present invention may also be produced by the conventional melt spinning process in which the melt is ejected through a nozzle onto the surface of a chill roller.

According to preferred embodiments of the present invention, Ti, which has the function of delaying the nucleation and growth of α-Fe, is added, the rare-earth element is added at a low mole fraction, and V is also added, thereby obtaining a nanocomposite magnet structure in which α -Fe and iron-based borides with high magnetization are included in appropriate amounts. Thanks to the action of Ti and V added, the R₂Fe₁₄B type compound phase and α-Fe phase will not grow excessively even when the molten alloy is cooled at a decreased rate. Thus, a high-performance nanocomposite magnet, in which the R₂Fe₁₄B type compound phase has an average grain size of about 10 nm to about 200 nm and in which soft magnetic phases (e.g., α-Fe phase) with average grain sizes of about 1 nm to about 100 nm are finely dispersed even after the heat treatment, can be obtained.

A conventional nanocomposite magnet, consisting essentially of the R₂Fe₁₄B type compound phase and α-Fe phase, exhibits high magnetization because the conventional magnet includes about 5 vol% to about 50 vol% of α-Fe with high saturation magnetization. However, the conventional nanocomposite magnet includes boron at a lower percentage than the nanocomposite magnet according to any of various preferred embodiments of the present invention. Accordingly, if the conventional nanocomposite magnet is produced by a strip casting process that achieves a low cooling rate, then the crystal grain size may increase excessively and the performance of the magnet may deteriorate significantly. In contrast, since the material alloy of a nanocomposite magnet according to any of various preferred embodiments of the present invention includes boron at a mole fraction that exceeds 10 at%, nanocomposite magnets with excellent performance can be mass-produced by a strip casting process.

According to preferred embodiments of the present invention, the rare-earth element is added at a low mole fraction and Ti and V are added in combination such that the hard magnetic phase with the R₂Fe₁₄B type crystal structure has as large a volume percentage as possible and that the soft magnetic phases with high magnetization will not grow excessively but have a relatively large volume percentage. As a result, the demagnetization curve can have improved loop squareness. Also, the magnetization can be increased because the additives Ti and V can produce a boride phase (e.g., ferromagnetic iron-based borides) from a B-rich non-magnetic amorphous phase in the rapidly solidified alloy and can decrease the volume percentage of the non-magnetic amorphous phase remaining in the heated and crystallized alloy.

In preferred embodiments of the present invention, various process conditions, including alloy composition, alloy cooling rate and heat treatment temperature, are controlled appropriately, thereby producing iron-based borides and α-Fe with a saturation magnetization that is equal to, or even higher than, that of the R₂Fe₁₄B type compound phase. Examples of the soft magnetic phases produced include α-Fe (with a saturation magnetization of about 2.1 T) and Fe₂₃B₆ (with a saturation magnetization of about 1.6 T). In this case, the R₂Fe₁₄B type compound phase has a saturation magnetization of about 1.6 T where R is Nd.

As used herein, the term "amorphous phase" means not only a phase in which the atomic arrangement is sufficiently disordered, but also a phase containing embryos for crystallization, extremely small crystalline regions (size: several nanometers or less), and/or atomic clusters. More specifically, the term "amorphous phase" refers to any phase having a crystal structure that cannot be defined by X-ray diffraction analysis or TEM observation. Stated otherwise, any phase having a crystal structure that is clearly identifiable by X-ray diffraction analysis or TEM observation will be referred to herein as a "crystalline phase".

The present inventors discovered and confirmed via experiments that only when Ti and V were added in combination, the magnetization did not decrease as opposed to a situation where either Ti and Cr or Ti and Zr were added in combination. In addition, the demagnetization curve exhibited particularly good loop squareness. Based on these results, the present inventors believe that the additives Ti and V play a key role in minimizing the production of borides with low magnetization.

It should be noted that when Ti and Nb were added in combination, the magnetization did not decrease but the coercivity did decrease significantly.

In this manner, only when Ti and V are added in combination, a nanocomposite magnet with excellent performance, including about 4 at% to about 7 at% of rare-earth element and about 10 at% to about 15 at% of boron, can be obtained.

In various preferred embodiments of the present invention, the material alloy includes not only a sufficient amount of boron but also carbon as one of its indispensable elements. Thus, the melt of such a material alloy can have a kinematic viscosity of about 5 × 10⁻⁶ m²/s or less, and can flow smoothly enough to increase the degree of contact between the melt and the chill roller sufficiently. As a result, the melt can be cooled on the chill roller even more effectively. Thus, even if the chill rotter is rotating at a low velocity, a good nanocomposite magnet can also be obtained.

Consequently, in a preferred embodiment of the present invention, a strip casting process, in which a melt is directly poured through a shoot (i.e., a guide member) onto a chill roller without controlling the flow rate of the melt through a nozzle orifice, can be adopted. Thus, the inventive process is much more productive and cost-effective than a conventional melt spinning process requiring that flow rate control with a nozzle orifice. To amorphize the melt of an R-Fe-B based rare-earth alloy in a cooling rate range that is achievable even by a strip casting process, normally B (boron) needs to be added at about 10 at% or more. However, if too much B is added, then non-magnetic amorphous phases with high B concentrations will remain in the microstructure of the processed alloy even after the rapidly solidified alloy has been heated and crystallized. That is to say, no uniform, microcrystalline structure can be obtained. As a result, the volume percentage of the ferromagnetic phases decreases and the magnetization drops. However, if Ti and V are added as is done in preferred embodiments of the present invention, then the above phenomena are observed. Consequently, iron-based borides with high saturation magnetization are produced and the magnetization increases sufficiently.

### Preferred composition

If the total mole fraction x of B and C is about 10 at% or less, then it is difficult to make the desired rapidly solidified alloy, in which the R₂Fe₁₄B type crystalline phase and amorphous phase coexist, at a low cooling rate of about 10² °C/s to about 10⁵ °C/s. Also, even if the alloy is thermally treated after that, the resultant coercivity will not be so high. Also, where the mole fraction x is about 10 at% or less, no iron-based borides with high saturation magnetization are produced anymore. For these reasons, x should be greater than about 10 at%. On the other hand, if the total mole fraction x of B and C exceeds approximately 15 at%, then the volume percentage of the amorphous phases, remaining even in the heated and crystallized alloy, increases. In addition, the percentage of the α-Fe phase, which has a higher saturation magnetization than any other constituent phase, decreases, and the remanence Bᵣ also decreases as a result. In view of these considerations, the total mole fraction x of B and C is preferably greater than about 10 at% and equal to or smaller than about 15 at%, more preferably greater than about 11 at% and equal to or smaller than about 14 at%.

The (atomic) ratio p of C to B and C is about 0.01 to about 0.5. To achieve the effects expected from the additive C, the C ratio p should be at least equal to about 0.01. The reason is as follows. If p is much smaller than about 0.01, then almost no expected effects are achievable even if C is added. On the other hand, if p is far greater than about 0.5, then the volume percentage of the α-Fe phase with excessively large grain sizes increases so much as to cause deterioration of the resultant magnetic properties. The lower limit of the ratio p is preferably about 0.02, while the upper limit thereof is preferably about 0.25. More preferably, the ratio p is about 0.05 and about 0.15.

R is at least one element to be selected from the rare-earth elements (including Y). R preferably includes substantially no La or Ce. This is because if La or Ce is included, R (typically Nd) included in the R₂Fe₁₄B phase should be replaced with La or Ce, thus decreasing the coercivity and the loop squareness of the demagnetization curve. However, even if a very small percentage (i.e., about 0.5 at% or less) of La or Ce is included as an inevitably contained impurity, the magnetic properties will not be affected so seriously. Therefore, the phrase "including substantially no La (Ce)" or "substantially excluding La (Ce)" herein means that the content of La (Ce) is about 0.5 at% or less.

More specifically, R preferably includes Pr or Nd as an indispensable element, a portion of which may be replaced with Dy and/or Tb. If the mole fraction y of R is less than about 4 at%, then the compound phase having the R₂Fe₁₄B type crystal structure, which is needed to achieve high coercivity, does not crystallize sufficiently and the desired high coercivity H_{cJ} cannot be obtained. On the other hand, if the mole fraction y of R is equal to or greater than about 7 at%, then the amorphous forming ability will decline and the volume percentage of the soft magnetic phases produced (such as the α-Fe and Fe-B phases) will also decrease. As a result, the magnetization will drop. For these reasons, the mole fraction y of the rare-earth element R is preferably equal to or greater than about 4 at% but less than about 7 at%, more preferably equal to or greater than about 5 at% but less than about 6 at%.

The additive Ti effectively contributes to nucleating and growing the hard magnet phase earlier than the soft magnet phases while the molten alloy is being rapidly cooled and solidified. In addition, the additive Ti increases the coercivity H_{cJ}, remanence Bᵣ and maximum energy product (BH)ₘₐₓ and improves the loop squareness of the demagnetization curve.

If the mole fraction z of Ti is less than about 0.5 at%, then the above effects are not achieved fully even though Ti is added. Nevertheless, if the mole fraction z of Ti exceeds about 8 at%, then the volume percentage of the amorphous phases, remaining even in the heated and crystallized alloy, increases and the remanence Bᵣ often decreases. In view of these considerations, the mole fraction z of Ti is from about 0.5 at% to about 8 at%. The lower limit of a more preferable z range is about 1.0 at% and the upper limit thereof is about 6 at%. The upper limit of an even more preferable z range is about 5 at%.

Also, the higher the total mole fraction x of B and C, the more likely the amorphous phases, including an excessive percentage of boron, for example, are formed. Thus, the mole fraction z of Ti is preferably increased for this reason also. Ti has a strong affinity for B and is condensed around the grain boundaries of the hard magnetic phases. However, if the ratio of the mole fraction z of Ti to the mole fraction x of B is too high, then Ti will not be present around the grain boundaries anymore but may be incorporated into the R₂Fe₁₄B compound, thus possibly decreasing the magnetization. Nevertheless, if the z/x ratio is too low, then non-magnetic B-rich amorphous phases will be produced profusely. The present inventors confirmed via experiments that the mole fractions x and z were preferably controlled so as to satisfy the inequality of 0.05≦z/x≦ 0.4, more preferably to satisfy the inequality of 0.1 ≦z/x≦ 0.35, and even more preferably to satisfy the inequality of 0.13≦z/x≦ 0.3.

The other additive V can advantageously reduce the amount of Ti to be added to achieve excellent magnet performance. As a result, the production of a Ti-B compound is minimized, the magnetization can be increased, and the viscosity of the melt can be decreased. Consequently, the material alloy can be rapidly cooled and solidified by the strip casting process more easily.

If the mole fraction w of V is less than about 0.01 at%, then these effects expected by the addition of V are not achievable. However, if the mole fraction w exceeds about 6 at%, then a V-Fe-B based compound will nucleate, thus possibly deteriorating the magnet performance. In view of these considerations, the mole fraction w is about 0.01 at% to about 6 at%, more preferably about 0.1 at% to about 4 at%, and even more preferably about 0.5 at% to about 2 at%.

To achieve various desired advantages and effects, metal element(s) M may be added. M is at least one element selected from the group consisting of Al, Si, Cr, Mn, Cu, Zn, Ga, Nb, Zr, Mo, Ag, Ta and W. The present inventors confirmed via experiments that even when any of these metal elements M were added, the effects to be achieved by the additives Ti and V were not lessened significantly unless the mole fraction of the metal elements M exceeded about 10 at%.

The balance of the material alloy, other than the elements B, C, R, Ti, V and M, may be Fe alone. Alternatively, at least one transition metal element T, selected from the group consisting of Co and Ni, may be substituted for a portion of Fe, because the desired hard magnetic properties are achievable in that case also. However, if the atomic number ratio m of the substituent T to Fe exceeds about 0.5, then a high remanence Bᵣ of about 0.7 T or more cannot be achieved. For that reason, the atomic number ratio m is preferably about 0 to about 0.5. Also, by substituting Co for a portion of Fe, the loop squareness of the demagnetization curve improves and the Curie temperature of the R₂Fe₁₄B phase increases, thus increasing the thermal resistance of the alloy. The atomic number ratio m of the substituent Co to Fe is preferably about 0.005 to about 0.4.

Hereinafter, specific preferred embodiments of the present invention will be described in detail with reference to the accompanying drawings.

A first specific preferred embodiment of the present invention will be described.

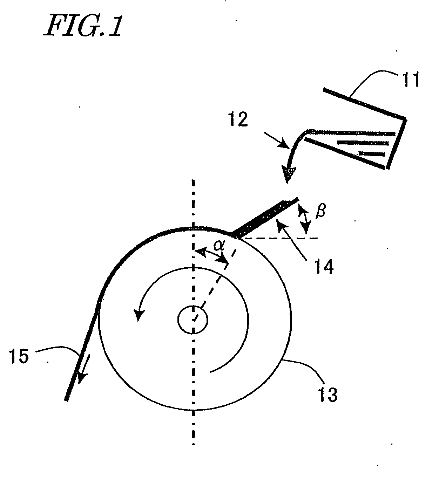

In this preferred embodiment, a rapidly solidified alloy is preferably prepared using the strip caster shown in FIG. **1**. The alloy preparation process is preferably carried out within an inert gas atmosphere to prevent the material alloy, which includes rare-earth elements R and Fe that are easily oxidizable, from being oxidized. The inert gas may be either a rare gas of helium or argon, for example, a nitrogen gas, or any other suitable gas. The rare gas of helium or argon is preferred to the nitrogen gas, because nitrogen reacts with the rare-earth elements R relatively easily.

The strip caster shown in FIG. **1** is provided in a chamber (not shown) in which a reduced-pressure inert atmosphere can be created. As shown in FIG. **1,** the strip caster preferably includes a melting crucible **11,** a chill roller **13** and a shoot (i.e., a guide member) **14.** First, a material alloy is melted in the melting crucible **11.** Next, the melt **12** is drained from the melting crucible **11** and then guided by way of the shoot **14** onto the chill roller **13** so as to be rapidly cooled and solidified thereon.

The melting crucible **11** is preferably arranged so as to feed the melt **12,** obtained by melting the material alloy, onto the shoot **14** at a substantially constant feeding rate. This feeding rate is arbitrarily controllable by tilting the melting crucible **11** at a desired angle, for example.

The outer surface of the chill roller **13** is preferably made of a material with good thermal conductivity (e.g., copper). The roller **13** preferably has a diameter of about 30 cm to about 100 cm and a width of about 15 cm to about 100 cm. The roller **13** can be rotated at a predetermined velocity by a motor (not shown). By controlling this rotational velocity, the surface velocity of the chill roller **13** is arbitrarily adjustable. The cooling rate achieved by this strip caster is controllable within the range of about 10³ °C/s to about 10⁵ °C/s by selecting an appropriate rotational velocity for the chill roller **13,** for example.

The surface of the shoot **14** on which the melt **12** is guided preferably defines a tilt angle β with respect to a horizontal plane. The distance between the far end of the shoot **14** and the surface of the chill roller **13** is preferably within about several millimeters. Also, the shoot **14** is arranged such that the line connecting the far end of the shoot **14** to the center of the chill roller **13** defines an angle α (where 0≦ α≦90 degrees) with respect to a perpendicular plane. The angle α preferably satisfies 10 degrees≦ α≦55 degrees.

On the other hand, the tilt angle β of the shoot **14** preferably satisfies 1 degree≦ β ≦80 degrees, and more preferably satisfies 5 degrees≦ β ≦60 degrees.

After having been poured onto the shoot **14,** the melt **12** will be teemed from the far end of the shoot **14** onto the surface of the chill roller **13,** thereby forming a melt puddle thereon. The shoot **14** can rectify the flow of the melt **12** by decreasing the flow velocity of the melt **12** to such a degree as to temporarily reserve the flow of the melt **12** that is being continuously fed from the melting crucible **11** at a predetermined flow rate. This rectification effect can be further increased with a dam plate for selectively damming back the surface flow of the melt **12** that has been poured onto the shoot **14.** By using this shoot **14,** the melt **12** can be teemed so as to have a substantially constant width in the longitudinal direction of the chill roller **13.** As used herein, the "longitudinal direction" of the chill roller **13** is equivalent to the axial direction of the roller **13** (i.e., the direction coming out of the paper). Also, the melt **12** being teemed can be spread so as to have a substantially uniform thickness. By adjusting the tilt angle β of the melt guide surface of the shoot **14,** the melt feeding rate is finely controllable. Due to its own weight, the melt **12** flows down on the tilted guide surface of the shoot **14.** Accordingly, the melt **12** has a kinetic momentum that is substantially parallel to the horizontal (i.e., X-axis) direction. That is to say, the larger the tilt angle β of the shoot **14,** the higher the flow velocity of the melt **12** and the greater the momentum thereof.

In addition, the shoot **14** can also adjust the temperature of the melt **12** that is about to reach the chill roller **13.** The temperature of the melt **12** on the shoot **14** is preferably higher than the liquidus temperature thereof by about 100 °C or more. This is because if the temperature of the melt **12** is too low, then initial crystals of TiB₂, for example, which will affect the properties of the resultant rapidly solidified alloy, might locally nucleate and remain in the rapidly solidified alloy. Also, if the temperature of the melt **12** is too low, then the melt **12** should have an increased viscosity and much more likely splashes. The melt temperature on the shoot **14** is controllable by adjusting the temperature of the melt **12** that is being teemed from the melting crucible **11** toward the shoot **14** or the heat capacity of the shoot **14** itself, for example. If necessary, a shoot heater (not shown) may be provided specially for this purpose.

The shoot **14** of this preferred embodiment preferably includes a plurality of drains, which are spaced apart from each other at regular intervals in the axial direction of the chill roller **13,** at the far end thereof that faces the outer periphery of the chill roller **13.** The width of each of these drains (corresponding to the width of each melt flow) is preferably about 0.5 cm to about 10.0 cm, more preferably about 0.7 cm to about 4.0 cm. In the present preferred embodiment, each melt flow has a width of about 1 cm at its corresponding drain. It should be noted that each melt flow tends to increase its width laterally as the melt flow travels farther away from its associated drain. Where a number of drains are provided on the shoot **14** to form multiple melt flows as is done in this preferred embodiment, each adjacent pair of melt flows should not contact with each other.

After the melt **12** has been poured onto the shoot **14,** the melt **12** is separated into a plurality of melt flows so that each melt flow has substantially the same width as that of its associated drain in the axial direction of the chill roller **13.** Then, each of those melt flows comes into contact with the chill roller **13.** Thereafter, each melt flow **12,** which has been teemed onto the chill roller **13** at a predetermined width, moves upward on the peripheral surface of the roller **13** as the roller **13** rotates. In this manner, the melt flow **12** is rapidly cooled while moving along with the roller **13.** It should be noted that to prevent the melt from leaking, the distance between the far end of the shoot **14** and the chill roller **13** is preferably about 3 mm or less, and more preferably from about 0.4 mm to about 0.7 mm.

The interval between each adjacent pair of drains is preferably about 1 cm to about 10 cm. In this manner, the melt **12** can be brought into contact with the outer periphery of the chill roller **13** at mutually separate positions. Then, each melt flow that has been teemed through its associated drain can be cooled effectively. Consequently, even if the melt **12** is poured onto the shoot **14** at an increased rate, the desired cooling rate is also achieved.

It should be noted that the shoot **14** does not have to have the configuration described above. Alternatively, the shoot **14** may have just one drain or each melt flow may be teemed at an increased width. As another alternative, a tubular opening may also be provided at the far end (or the bottom) of the shoot **14** such that the melt **12** is teemed through the tubular opening onto the surface of the chill roller **13.** Other modifications to the shoot **14** may also be made as desirable.

After the melt **12** has been rapidly solidified on the outer periphery of the rotating chill roller **13,** the rapidly solidified alloy leaves the chill roller **13** as a thin-strip solidified alloy **15.** In the present preferred embodiment, each melt flow, which has been teemed through associated one of the drains, is solidified as a strip of a predetermined width. Then, the solidified alloy **15** is crushed and collected by a collector (not shown).

As described above, the strip casting process does not use any nozzle unlike the melt spinning process. That is to say, the strip casting process does not experience any of various problems associated with the melt spinning process. Specifically, in the strip casting process, the melt feeding rate is not limited by the diameter of the nozzle, and the nozzle clogging problem, which would otherwise be caused by the unexpected solidification of the melt at the nozzle, is also avoidable because the strip casting process needs no nozzles at all. Thus, the strip casting process is very effective for mass production. Furthermore, no nozzle heating equipment or no melt head pressure control mechanism is needed. As a result, the initial equipment cost and equipment operation cost can be reduced significantly.

Also, in the melt spinning process, the nozzle is not recyclable, and therefore, should be disposed of once used even though it usually needs a high processing cost to make the nozzle. In contrast, the strip casting process allows a repeated use of the shoot, thus requiring a much lower equipment operation cost.

Furthermore, in the strip casting process, the chill roller can be rotated at a lower velocity, and the melt can be teemed at a higher rate, than the melt spinning process. Thus, the resultant thin-strip rapidly solidified alloy can be thickened.

By appropriately determining the shape and configuration of the shoot **14**, the width and the number of melt drains and the melt feeding rate, for example, the resultant thin-strip rapidly solidified alloy can have an average thickness and an average width that are within preferred ranges. The thin-strip rapidly solidified alloy preferably has a width of about 15 mm to about 80 mm. Also, the thin-strip alloy may not be too thin or too thick. If the solidified alloy is too thin, then the tap density thereof will be too low to collect it as intended. Nevertheless, if the solidified alloy is too thick, then the alloy may have been cooled on the melt/roller contact surface and on the free surface (i.e., melt surface) at significantly different cooling rates. That is to say, a portion of the alloy around the free surface may have been cooled at an insufficient rate. In view of these considerations, the thin-strip alloy preferably has a thickness of about 50 *µ*m to about 250 *µ*m, more preferably about 60 *µ*m to about 200 *µ*m, and even more preferably about 70 *µ*m to about 90 *µ*m. Also, considering the fill density of a bonded magnet, the thin-strip alloy preferably has a thickness of more than 80 *µ*m. In this case, the rapid cooling atmosphere preferably has a reduced pressure of about 10 kPa to about 101.2 kPa.

Optionally, the nanocomposite magnet according to any of various preferred embodiments of the present invention may also be produced by any other melt-quenching process such as a melt spinning process or an atomization process, instead of the strip casting process described above.

### Heat treatment

In the present preferred embodiment, the heat treatment is preferably conducted within an argon atmosphere. Preferably, the alloy is heated at a temperature increase rate of about 5 °C/s to about 20 °C/s, kept heated at a temperature of about 550 °C to about 850 °C for a period of time of approximately 30 seconds to approximately 20 minutes, and then cooled to room temperature. This heat treatment results in nucleation and/or crystal growth of metastable phases in a remaining amorphous phase, thus forming a nanocomposite microstructure.

If the heat treatment temperature is lower than about 550 °C, then a lot of amorphous phases may remain even after the heat treatment and the resultant coercivity may not reach the desired level depending on the conditions of the rapid cooling process. On the other hand, if the heat treatment temperature exceeds about 850 °C, the grain growth of the respective constituent phases will advance too much, thus decreasing the remanence Bᵣ and deteriorating the loop squareness of the demagnetization curve. For these reasons, the heat treatment temperature is preferably from about 550 °C to about 850 °C, more preferably from about 570 °C to about 820 °C.

To prevent the alloy from being oxidized, the heat treatment is preferably conducted within an inert gas (e.g., Ar gas or N₂ gas) atmosphere or a gas flow thereof. The heat treatment may also be carried out within a vacuum of about 0.1 kPa or less.

In preferred embodiments of the present invention, even if the soft magnet phases such as α-Fe, Fe₃B and Fe₂₃B₆ phases, which have crystal grain sizes smaller than that of the hard magnetic phase, exist in the resultant magnet, excellent magnetic properties can still be achieved, because the soft and hard magnetic phases are magnetically coupled together through exchange interactions.

After the heat treatment, the Nd₂Fe₁₄B type compound phase preferably has an average crystal grain size of at most about 300 nm, which is a single magnetic domain size. The average crystal grain size of the Nd₂Fe₁₄B type compound phase is preferably about 10 nm to about 200 nm, more preferably about 10 nm to about 150 nm. On the other hand, if the ferromagnetic iron-based boride and α-Fe phases have an average crystal grain size exceeding about 100 nm, then the exchange interactions among the respective constituent phases weakens, thus deteriorating the loop squareness of the demagnetization curve and decreasing (BH)ₘₐₓ. Normally, these phases do not precipitate as very small crystallites (of a size smaller than about 1 nm in diameter) but are formed as crystallites of a size as large as a few nm in diameter. For these reasons, the soft magnetic phases, such as the boride and α-Fe phases, preferably have an average crystal grain size of about 1 nm to about 100 nm, more preferably about 5 nm to about 50 nm, and even more preferably about 5 nm to about 30 nm. Also, to make the resultant magnet an exchange spring magnet with excellent performance, the average crystal grain size of the Nd₂Fe₁₄B type compound phase is preferably greater than that of the soft magnetic phases.

It should be noted that the thin strip of the rapidly solidified alloy may be coarsely cut or pulverized before subjected to the heat treatment. After thermally treated, the resultant magnetic alloy may be finely pulverized to obtain a magnet powder. Then, various types of bonded magnets can be made from this powder by performing known process steps on the powder. In making a bonded magnet, the magnet powder of the iron-based rare earth alloy is mixed with an epoxy or nylon resin binder and then the mixture is compacted into a desired shape. In this case, a magnet powder of any other type (e.g., an Sm-Fe-N based magnet powder or hard ferrite magnet powder) may be mixed with the nanocomposite magnet powder.

Using the resultant bonded magnet of preferred embodiments of the present invention, motors, actuators and various other rotating machines can be produced.

If the magnet powder of various preferred embodiments of the present invention is used to make an injection-molded bonded magnet, the powder is preferably pulverized to have a mean particle size of approximately 200 *µ*m or less, more preferably about 30 *µ*m to about 150 *µ*m. On the other hand, if the inventive magnet powder is used to make a compressed bonded magnet, the powder is preferably pulverized to have a mean particle size of about 300 µm or less, more preferably about 30 µm to about 250 µm, and even more preferably about 50 µm to about 200 µm with a bimodal size distribution.

### Examples

### EXAMPLE 1

For each of the samples Nos. 1 to 8 shown in the following Table 1, the respective materials B, C, Fe, Co, Ti, V and Nd with purities of about 99.5% or more were weighed so that the sample had a total weight of about 600 g and then the mixture was put into a crucible of alumina. Thereafter, these alloyed materials were melted by an induction heating method within an argon (Ar) atmosphere at a pressure of about 70 kPa, thereby preparing a melt of the alloy. After the temperature of the melt had reached about 1,500 °C, the melt was cast into a water-cooled copper mold to make a flat-plate alloy. Thereafter, the alloy was weighed so as to have a total weight of about 15 g and then put into a crucible of quartz having an orifice with a diameter of about 0.8 mm at the bottom. Then, the alloy was melted by an induction heating method within an argon (Ar) atmosphere at a pressure of about 1.33 kPa to about 47.92 kPa, thereby preparing a melt of the alloy. After the temperature of the melt had reached approximately 1,350 °C, the surface of the melt was pressurized with an Ar gas, thereby ejecting the melt through the orifice onto the outer periphery of a chill roller, which was located at about 0.7 mm under the orifice, within the Ar atmosphere at room temperature. The chill roller was being rotated so as to have a surface velocity of approximately 10 m/s. As a result of the contact with such a chill roller, the molten alloy was rapidly cooled and solidified. In this manner, a continuous thin strip (ribbon) of rapidly solidified alloy with a width of about 2 mm to about 3 mm and a thickness of about 20 *µ*m to about 50 *µ*m was obtained.

**Table 1**

| | No. | Alloy composition (at%) | | | | | | | | Heat treatment |
|---|---|---|---|---|---|---|---|---|---|---|
| | | Nd | Fe | T | B | C | Ti | V | M | Temperature (°C) |
| E | 1 | 5.8 | Balance | - | 12 | 1 | 4 | 1 | - | 720 |
| X | 2 | 5.8 | Balance | - | 12 | 1 | 4 | 1.5 | - | 700 |
| A | 3 | 5.8 | Balance | - | 12 | 1 | 4 | 2 | - | 700 |
| M | 4 | 5.8 | Balance | Co4 | 12 | 1 | 4 | 1.5 | - | 700 |
| C | 5 | 5.8 | Balance | - | 12 | 0 | 4 | 0 | 0 | 720 |
| O | 6 | 5.8 | Balance | - | 12 | 1 | 4 | 0 | Nb1 | 740 |
| M | 7 | 5.8 | Balance | - | 12 | 1 | 4 | 0 | Zr1 | 720 |
| P | 8 | 5.8 | Balance | - | 12 | 1 | 4 | 0 | Cr1 | 740 |

In Table 1, Samples Nos. 1 through 4 represent specific examples of preferred embodiments of the present invention, while Samples Nos. 5 through 8 represent comparative examples.

This thin-strip rapidly solidified alloy was heated to a temperature of about 600 °C to 800 °C within the Ar atmosphere, kept heated at the temperature for about 6 minutes to about 8 minutes, and then cooled to room temperature. Thereafter, the magnetic properties of this thin-strip rapidly solidified alloy were measured using a vibrating sample magnetometer (VSM). The results are shown in the following Table 2:

**Table 2**

| | Sample No. | Magnetic properties of solidified alloy | | |
|---|---|---|---|---|
| | | Bᵣ(T) | H_{cJ}(kA/m) | (BH)ₘₐₓ (kJ/m³) |
| E X A M | 1 | 0.93 | 404 | 93 |
| | 2 | 0.92 | 450 | 106 |
| | 3 | 0.92 | 468 | 96 |
| | 4 | 0.92 | 466 | 109 |
| C O M P | 5 | 0.90 | 442 | 92 |
| | 6 | 0.92 | 368 | 81 |
| | 7 | 0.83 | 446 | 77 |
| | 8 | 0.80 | 461 | 71 |

As can be seen from the results shown in Table 2, in each of the specific examples of preferred embodiments of the present invention, the magnetization increased, the loop squareness of the demagnetization curve improved, and the maximum energy product (BH)ₘₐₓ was higher than any of the comparative examples. In particular, Samples Nos. 1 and 5 were produced under quite the same conditions except that V was added to Sample No. 1 but not added to Sample No. 5. Accordingly, comparing the results of these two samples with each other, it can be seen that the remanence Bᵣ and maximum energy product (BH)ₘₐₓ of Sample No. 1 were at least about 1 % higher than those of Sample No. 5.

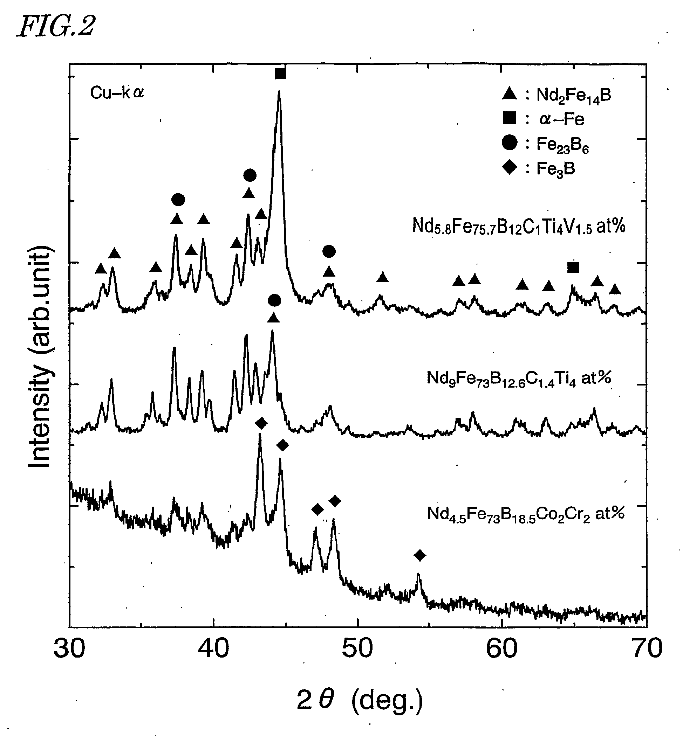

FIG. 2 shows the results of a powder XRD that was carried out on Samples A, B and C that had been thermally treated at about 700 °C for approximately 6 minutes. The compositions of Samples A, B and C were Nd_{5.8}Fe_{75.7}B₁₂C₁Ti₄V_{1.5}, Nd₉Fe₇₃B_{12.6}C_{1.4}Ti₄ and Nd_{4.5}Fe₇₃B_{18.5}Co₂Cr₂, respectively.

Specifically, Sample A represents a specific example of a preferred embodiment of the present invention. As can be seen from the results shown in FIG. 2, Sample A showed a far more remarkable peak of intensity representing the α -Fe phase than any of the two other samples. Sample A is an α-Fe/R₂Fe₁₄B based nanocomposite magnet including an Nd₂Fe₁₄B phase (i.e., a hard magnetic phase) and an α-Fe phase (i.e., a soft magnetic phase) as its main constituent phases. In addition, Sample A further includes an Fe₂₃B₃ phase as another soft magnetic phase.

On the other hand, Sample B is a nanocomposite magnet in which an iron-based boride such as Fe₃B is present on the grain boundary of the Nd₂Fe₁₄B phase as a hard magnetic phase. Sample C is an Fe₃B/Nd₂Fe₁₄B based nanocomposite magnet including Fe₃B at a relatively large volume percentage.

### INDUSTRIAL APPLICABILITY

According to various preferred embodiments of the present invention, Ti and V are added in combination to the material alloy, of which the composition has been virtually ineffective in producing nanocomposite magnets with good enough magnetic properties by any conventional method, thereby making it possible to mass-produce nanocomposite magnets with practical magnetic properties.

In various preferred embodiments of the present invention, even though the material alloy includes a relatively large amount of boron, the additive V effectively prevents an unwanted Ti-B compound from being produced. Accordingly, the melt of such a material alloy will not have an excessively increased viscosity, thus contributing to mass-producing α-Fe/R₂Fe₁₄B based nanocomposite magnets by a strip casting process.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A nanocomposite magnet having a composition represented by the general formula:
(Fe₁₋ₘTₘ)_{100-x-y-z-w-n}(B₁₋ₚCₚ)ₓR_{y}Ti_{z}V_{w}Mₙ,
where T is at least one element selected from the group consisting of Co and Ni; R is a rare-earth element; and M is at least one element selected from the group consisting of Al, Si, Cr, Mn, Cu, Zn, Ga, Nb, Zr, Mo, Ag, Ta and W, the mole fractions x, y, z, w, n, m and p satisfying the inequalities of:
10 at %<x≦15 at%;
4 at%≦y<7 at%;
0.5 at%≦z≦8 at%;
0.01 at%≦w≦6 at%;
0 at%≦n≦10 at%;
0≦m≦0.5; and
0.01≦p≦0.5, respectively,
wherein the nanocomposite magnet includes: a hard magnetic phase with an R₂Fe₁₄B type crystal structure; and a soft magnetic phase, and
wherein at least one of the coercivity and the maximum energy product of the nanocomposite magnet is at least 1% higher than that of a magnet including no V.

2. The nanocomposite magnet of claim 1, wherein the nanocomposite magnet includes at least 40 vol% of the hard magnetic phase with the R₂Fe₁₄B type crystal structure.

3. The nanocomposite magnet of claim 1 or 2, wherein the hard magnetic phase with the R₂Fe₁₄B type crystal structure has an average grain size of about 10 nm to about 200 nm, and
wherein the soft magnetic phase has an average grain size of about 1 nm to about 100 nm.

4. The nanocomposite magnet of one of claims 1 to 3, wherein the soft magnetic phase includes α-Fe and a ferromagnetic iron-based boride.

5. A method for producing a nanocomposite magnet of claim 1, the method comprising the steps of:
preparing a nanocomposite magnet powder having a composition represented by the general formula:
(Fe₁₋ₘTₘ)_{100-x-y-z-w-n}(B₁₋ₚCₚ)ₓR_{y}Ti_{z}V_{w}Mₙ,
where T is at least one element selected from the group consisting of Co and Ni; R is a rare-earth element; and M is at least one element selected from the group consisting of Al, Si, Cr, Mn, Cu, Zn, Ga, Nb, Zr, Mo, Ag, Ta and W, the mole fractions x, y, z, w, n, m and p satisfying the inequalities of:
10 at%<x≦15 at%;
4 at%≦y<7 at%;
0.5 at%≦z≦8 at%;
0.01 at%≦w≦6 at%;
0 at%≦n≦10 at%;
0≦m≦0.5; and
0.01≦p≦0.5, respectively,
wherein the nanocomposite magnet powder includes: a hard magnetic phase with an R₂Fe₁₄B type crystal structure; and a soft magnetic phase, and wherein at least one of the coercivity and the maximum energy product of the nanocomposite magnet powder is at least 1% higher than that of a magnet powder including no V; and
compacting the nanocomposite magnet powder to obtain the nanocomposite magnet.

## Patentansprüche

1. Ein Nanokomposit-Magnet mit einer Zusammensetzung, die durch die allgemeine Formel beschrieben wird:
(Fe₁₋ₘTₘ)_{100-x-y-z-w-n}(B₁₋ₚC_{P})ₓR_{y}Ti_{z}V_{w}Mₙ,
wobei T wenigstens ein Element ist, ausgewählt aus der Gruppe, die aus Co und Ni besteht; R wenigstens ein Seltenerdelement ist; und M wenigstens ein Element ist, ausgewählt aus der Gruppe, die aus Al, Si, Cr, Mn, Cu, Zn, Ga, Nb, Zr, Mo, Ag, Ta und W besteht, wobei die Molenbrüche x, y, z, w, n, m und p jeweils die folgenden Ungleichheiten erfüllen:
10 Atom% <x≦15 Atom%;
4 Atom% ≦ y < 7 Atom%;
0,5 Atom% ≦ z ≦ 8 Atom%;
0,01 Atom% ≦ w ≦ 6 Atom%;
0 Atom% ≦ n ≦ 10 Atom%;
0 ≦ m ≦ 0,5; und
0,01 ≦ p ≦ 0,5,
wobei der Nanokomposit-Magnet enthält: eine hartmagnetische Phase mit einer Kristallstruktur des R₂Fe₁₄B- Typs und eine weichmagnetische Phase, und
wobei wenigstens eines von der Koerzivität und des maximalen Energieprodukts des Nanokomposit-Magnets zumindest 1 % höher als die/das eines Magneten ist, der kein V enthält.

2. Der Nanokomposit-Magnet gemäß Anspruch 1, wobei der Nanokomposit-Magnet zumindest 40 Vol% der hartmagnetischen Phase mit der Kristallstruktur des R₂Fe₁₄B-Typs enthält.

3. Der Nanokomposit-Magnet gemäß Anspruch 1 oder 2, wobei die hartmagnetische Phase mit der Kristallstruktur des R₂Fe₁₄B-Typs eine durchschnittliche Korngröße von ungefähr 10 nm bis ungefähr 200 nm aufweist, und
wobei die weichmagnetische Phase eine durchschnittliche Korngröße von ungefähr 1 nm bis ungefähr 100 nm aufweist.

4. Der Nanokomposit-Magnet gemäß einem der Ansprüche 1 bis 3, wobei die weichmagnetische Phase α-Fe- und ein ferromagnetisches Borid auf Eisenbasis enthält.

5. Ein Verfahren zum Herstellen eines Nanokomposit-Magneten nach Anspruch 1, wobei das Verfahren die Schritte umfasst:
Anfertigen eines Nanokomposit-Magnetpulvers mit einer Zusammensetzung, beschrieben durch die allgemeine Formel:
(Fe₁₋ₘ Tₘ)_{100-x-y-z-w-n}(B₁₋ₚCp)ₓR_{y} Ti_{z}V_{w}Mₙ
wobei T wenigstens ein Element ist, ausgewählt aus der Gruppe, die aus Co und Ni besteht; R wenigstens ein Seltenerdelement ist; und M wenigstens ein Element ist, ausgewählt aus der Gruppe, die aus Al, Si, Cr, Mn, Cu, Zn, Ga, Nb, Zr, Mo, Ag, Ta und W besteht, wobei die Molenbrüche x, y, z, w, n, m und p jeweils die folgenden Ungleichheiten erfüllen:
10 Atom% < x ≦ 15 Atom%;
4 Atom% ≦ y < 7 Atom%;
0,5 Atom% ≦ z ≦ 8 Atom%;
0,01 Atom% ≦ w ≦ 6 Atom%;
0 Atom% ≦ n ≦ 10 Atom%;
0 ≦ m ≦ 0,5; und
0,01 ≦ p ≦ 0,5,
wobei das Nanokomposit-Magnetpulver enthält: eine hartmagnetische Phase mit einer Kristallstruktur des R₂Fe₁₄B-Typs und eine weichmagnetische Phase, und
wobei wenigstens eines von der Koerzivität und des maximalen Energieprodukts des Nanokomposit-Magnets zumindest 1 % höher als die/das eines Magnetpulvers ist, das kein V enthält; und
Verdichten des Nanokomposit-Magnetpulvers, um den Nanokomposit-Magneten zu erhalten.

## Revendications

1. Aimant nanocomposite ayant une composition représentée par la formule générale :
(Fe₁₋ₘTₘ)_{100-x-y-z-w-n}(B₁₋ₚCₚ)ₓR_{y}Ti_{z}V_{w}Mₙ,
où T est au moins un élément choisi dans le groupe constitué par Co et Ni ; R est un élément de terre rare ; et M est au moins un élément choisi dans le groupe constitué par Al, Si, Cr, Mn, Cu, Zn, Ga, Nb, Zr, Mo, Ag, Ta et W, les fractions molaires x, y, z, w, n, m et p satisfaisant les inégalités de :
10 % atomique < x ≤ 15 % atomique ;
4 % atomique ≤ y < 7 % atomique ;
0,5 % atomique ≤ z ≤ 8 % atomique ;
0,01 % atomique ≤ w ≤ 6 % atomique ;
0 % atomique ≤ n ≤ 10 % atomique ;
0≤m≤0,5 ; et
0,01 ≤ p ≤ 0,5 respectivement,
dans lequel l'aimant nanocomposite comprend : une phase magnétique dure ayant une structure cristalline de type R₂Fe₁₄B ; et une phase magnétique douce, et
dans lequel au moins l'un de la coercivité et du produit d'énergie maximal de l'aimant nanocomposite est au moins 1 % supérieur à celui d'un aimant ne comprenant aucun V.

2. Aimant nanocomposite selon la revendication 1, dans lequel l'aimant nanocomposite comprend au moins 40 % en volume de la phase magnétique dure ayant la structure cristalline de type R₂Fe₁₄B.

3. Aimant nanocomposite selon la revendication 1 ou 2, dans lequel la phase magnétique dure ayant la structure cristalline de type R₂Fe₁₄B a une taille moyenne de grain d'environ 10 nm à environ 200 nm, et
dans lequel la phase magnétique douce a une taille moyenne de grain d'environ 1 nm à environ 100 nm.

4. Aimant nanocomposite selon l'une des revendications 1 à 3, dans lequel la phase magnétique douce comprend du α-Fe et un borure de fer ferromagnétique.

5. Procédé de production d'un aimant nanocomposite selon la revendication 1, le procédé comprenant les étapes consistant à :
préparer une poudre d'aimant nanocomposite ayant une composition représentée par la formule générale :
(Fe₁₋ₘTₘ)_{100-x-y-z-w-n}(B₁₋ₚCₚ)ₓR_{y}Ti_{z}V_{w}Mₙ,
où T est au moins un élément choisi dans le groupe constitué par Co et Ni ; R est un élément de terre rare ; et M est au moins un élément choisi dans le groupe constitué par Al, Si, Cr, Mn, Cu, Zn, Ga, Nb, Zr, Mo, Ag, Ta et W, les fractions molaires x, y, z, w, n, m et p satisfaisant les inégalités de :
10 % atomique < x ≤ 15 % atomique ;
4 % atomique ≤ y < 7 % atomique ;
0,5 % atomique ≤ z ≤ 8 % atomique ;
0,01 % atomique ≤ w ≤ 6 % atomique ;
0 % atomique ≤ n ≤ 10 % atomique ;
0 ≤ m ≤ 0,5 ; et
0,01 ≤ p ≤ 0,5 respectivement,
dans lequel la poudre d'aimant nanocomposite comprend : une phase magnétique dure ayant une structure cristalline de type R₂Fe₁₄B; et une phase magnétique douce, et dans lequel au moins l'un de la coercivité et du produit d'énergie maximal de la poudre d'aimant nanocomposite est au moins 1 % supérieur à celui d'une poudre d'aimant ne comprenant aucun V ; et
compacter la poudre d'aimant nanocomposite pour obtenir l'aimant nanocomposite.
